# FASCICULE DE BREVET EUROPEEN

(11) **EP 0 812 278 B1**
(45) Date de publication et mention de la délivrance du brevet: **17.05.2000**
(21) Numéro de dépôt: 96905887.4
(22) Date de dépôt: 29.02.1996
(51) Int. Cl.: B60T 15/42

(54) **DISTRIBUTEUR DE FREINAGE FERROVIAIRE COMPRENANT UN DISPOSITIF D'ACCELERATION AU SERRAGE**
SCHIENENFAHRZEUG-STEUERVENTIL MIT BREMSBESCHLEUNIGUNGSVORRICHTUNG
RAILWAY BRAKE VALVE INCLUDING AN APPLICATION ACCELERATING DEVICE

(30) Priorité: 03.03.1995 FR 9502477
(43) Date de publication de la demande: 17.12.1997
(73) Titulaire: SAB WABCO, 80000 Amiens (FR)
(72) Inventeur: LIMOZIN, Henri, F-77410 Claye-Souilly (FR); LE GALL, Gilbert, F-77500 Chelles (FR); DALLE MOLLE, Bruno, F-93290 Tremblay-en-France (FR); COMMAILLE, Daniel, F-77186 Noisiel (FR)
(74) Mandataire: Desrousseaux, Grégoire Marie
(86) Numéro de dépôt international: FR9600315
(87) Numéro de publication internationale: WO9627515

(56) Documents cités:
- EP-A- 0 001 131
- DE-A- 2 731 199

## Description

La présente invention a pour objet un distributeur de freinage à fluide sous pression pour un véhicule ferroviaire, comprenant des moyens de liaison à une conduite générale, des moyens de liaison à un réservoir de commande, des moyens de liaison à un réservoir auxiliaire, des moyens de liaison à des organes de freinage, et un dispositif principal, délivrant une pression de freinage vers les moyens de liaison à des organes de freinage, en fonction de la pression dans les moyens de liaison à une conduite générale et de la pression dans les moyens de liaison à un réservoir de commande.

Les trains de véhicules ferroviaires comprennent une installation de freinage qui s'étend sur toute la longueur du train, et qui est commandée par les variations de la pression d'un fluide (air comprimé) dans une conduite courant le long du train et appelée conduite générale de freinage.

Les distributeurs de freinage ferroviaire montés en principe sur chacun des véhicules du train sont des dispositifs connus permettant, sous la commande des variations de pression du fluide dans la conduite générale, de fournir du fluide sous pression de façon modérable au serrage et au desserrage, pour commander des organes de freinage, tels que des cylindres de frein, le cas échéant par l'intermédiaire d'un relais.

Chaque distributeur est relié non seulement aux organes de freinage (cylindres de frein) et à la conduite générale du véhicule, mais aussi à un réservoir de commande et à un réservoir auxiliaire.

Le réservoir de commande sert à fournir une pression de référence pour le serrage et le desserrage des organes de freinage. Le réservoir auxiliaire présente une capacité plus grande et fournit l'énergie nécessaire (un volume d'air comprimé) pour commander et actionner les organes de freinage.

A cet effet, un distributeur de freinage comprend un dispositif principal, dont la fonction est de délivrer une pression de freinage, en fonction de la pression de la conduite générale. La conduite générale est en temps normal sous une pression nominale. Pour provoquer le serrage des organes de freinage, on fait diminuer la pression de la conduite générale, et on la fait remonter pour provoquer le desserrage.

Dans ce genre d'installation de freinage, l'onde de serrage se propage le long de la conduite générale depuis la locomotive jusqu'à la queue du train. Un des objectifs poursuivis est de diminuer autant que possible la durée de la propagation de l'onde de freinage; ceci permet d'assurer un freinage plus homogène et de diminuer la poussée exercée par l'arrière du train au début du freinage, lorsque les premiers wagons du train ont commencé à freiner et que l'onde de serrage n'a pas atteint la queue du train.

Il a été proposé, pour augmenter la vitesse de propagation de l'onde de serrage, de munir un distributeur de freinage d'un dispositif accélérateur. Celui-ci comprend une poche normalement reliée à l'atmosphère. Au début du freinage, cette poche est isolée de l'atmosphère et mise en communication avec la conduite générale. De la sorte, un volume d'air déterminé est soutiré à la conduite générale en début du freinage, ce qui assure une propagation plus rapide de la baisse de pression jusqu'au dernier véhicule du train. On commande le fonctionnement du dispositif accélérateur en fonction de la différence entre la pression du réservoir de commande et la pression de la conduite générale.

Un des inconvénients d'un tel système est que le volume de la poche doit le cas échéant être adapté aux caractéristiques de la conduite générale. Une telle adaptation est difficile à réaliser.

De plus, la capacité d'accélération d'un système à poche est limitée par le volume de la poche. En outre, le remplissage progressif de la poche par la conduite générale ne présente pas une caractéristique linéaire, ce qui fait que l'accélération transmise à l'onde de serrage diminue lorsque la poche finit de se remplir.

Enfin, pour réarmer le système, il est nécessaire de purger complètement la poche, et le dispositif d'accélération n'est donc pas nécessairement disponible immédiatement après le desserrage.

EP-A-0 001 131 décrit un dispositif de ce type. Par ailleurs, DE-A-27 31 199 décrit un distributeur avec un dispositif accélérateur; le dispositif accélérateur comprend un premier clapet commandé par le dispositif principal, et qui est susceptible de relier la conduite principale à un deuxième clapet; le deuxième clapet est commandé par la pression de freinage et relié à l'atmosphère.

A cet effet, l'invention propose un distributeur de freinage à fluide sous pression pour un véhicule ferroviaire, tel que décrit dans la revendication 1.

On évite ainsi les inconvénients susmentionnés.

Dans un mode de réalisation, la chambre de détection est reliée aux moyens de liaison à des organes de freinage par l'intermédiaire d'un étranglement.

La valeur prédéterminée de la pression dans la chambre de détection peut être fonction de la force de réaction d'un ressort, ou d'une force de friction. Celle-ci peut être provoquée par au moins un joint d'étanchéité de la chambre de détection.

Ces divers modes de réalisation permettent de régler la durée d'ouverture du dispositif accélérateur.

Dans un mode de réalisation de l'invention, ledit dispositif principal comprend un équipage principal mobile sous l'action de la pression dans les moyens de liaison à une conduite générale et de la pression dans les moyens de liaison à un réservoir de commande; et ledit dispositif accélérateur comprend un équipage détecteur mobile présentant un piston soumis sur une face à la pression régnant dans ladite chambre de détection; un passage reliant à l'atmosphère lesdits moyens de liaison à une conduite générale; un clapet d'accélérateur monté sur ledit dispositif principal et susceptible d'obturer ledit passage; ledit clapet d'accélérateur ouvre ledit passage lorsque l'équipage principal se déplace pour délivrer une pression de freinage vers les moyens de liaison à des organes de freinage; et ledit clapet d'accélérateur ferme ledit passage lorsque la pression dans ladite chambre de détection dépasse une valeur prédéterminée et lorsque ledit piston d'équipage détecteur se déplace.

Dans ce cas, l'équipage détecteur peut être sollicité par un ressort dans une direction opposée à celle de l'action de la pression régnant dans ladite chambre de détection, ou encore être monté mobile par l'intermédiaire d'au moins un joint à friction.

Le distributeur de freinage peut présenter une poche reliée à ladite chambre de détection.

Le clapet d'accélérateur peut être monté sur ledit dispositif principal par l'intermédiaire de moyens de coulissement et d'entraînement, de sorte à être mobile par rapport audit dispositif principal suivant une faible course.

Ceci permet d'éviter les ouvertures intempestives.

Le distributeur de freinage peut aussi comprendre un dispositif de premier temps réduisant la section des moyens de liaison à un réservoir auxiliaire lorsque la pression dans les moyens de liaison à des organes de freinage dépasse une seconde valeur prédéterminée, et ladite valeur de pression prédéterminée de fermeture dudit dispositif accélérateur est inférieure à ladite seconde valeur prédéterminée.

Dans un mode de réalisation, le dispositif accélérateur est susceptible de relier à l'atmosphère les moyens de liaison à une conduite générale par l'intermédiaire d'une chambre accélératrice et d'un dispositif de verrouillage d'accélérateur, et ledit dispositif de verrouillage d'accélérateur isole de l'atmosphère ladite chambre accélératrice lorsque la pression dans les moyens de liaison à un réservoir auxiliaire est inférieure à une troisième valeur prédéterminée, et ledit dispositif de verrouillage d'accélérateur relie ladite chambre accélératrice à l'atmosphère lorsque la pression dans les moyens de liaison à un réservoir auxiliaire est supérieure à ladite troisième valeur prédéterminée.

Ce dispositif de verrouillage d'accélérateur permet d'éviter les problèmes de premier remplissage décrits plus bas.

Dans ce cas, le dispositif de verrouillage d'accélérateur relie avantageusement la chambre accélératrice à la chambre de détection lorsque la pression dans les moyens de liaison à un réservoir auxiliaire est inférieure à ladite troisième valeur prédéterminée, pour accélérer la fermeture du dispositif d'accélération.

Dans un mode de réalisation, l'équipage détecteur est disposé autour de l'équipage principal.

Dans ce cas, le passage du dispositif accélérateur peut avantageusement être un passage annulaire ménagé entre l'équipage détecteur et ledit équipage principal.

D'autres avantages et caractéristiques de l'invention apparaîtront à la lecture de la description qui suit d'un mode de réalisation de l'invention, donné à titre d'exemple et en référence aux dessins annexés, qui montrent:
- figure 1, une vue schématique en coupe longitudinale axiale du dispositif principal d'un distributeur de freinage selon l'invention;
- figure 2, une vue schématique en coupe d'un dispositif de verrouillage d'accélérateur utilisé dans un mode de réalisation de l'invention.
- figure 3, une vue schématique en coupe longitudinale du dispositif accélérateur selon un autre mode de réalisation de l'invention.

Dans toute la présente description, on mesure les pressions en utilisant comme référence la pression atmosphérique. On utilisera les termes "haut" et "bas" en référence aux figures, pour faciliter la description, sans que l'invention soit pour autant limitée à la configuration représentée sur celles-ci.

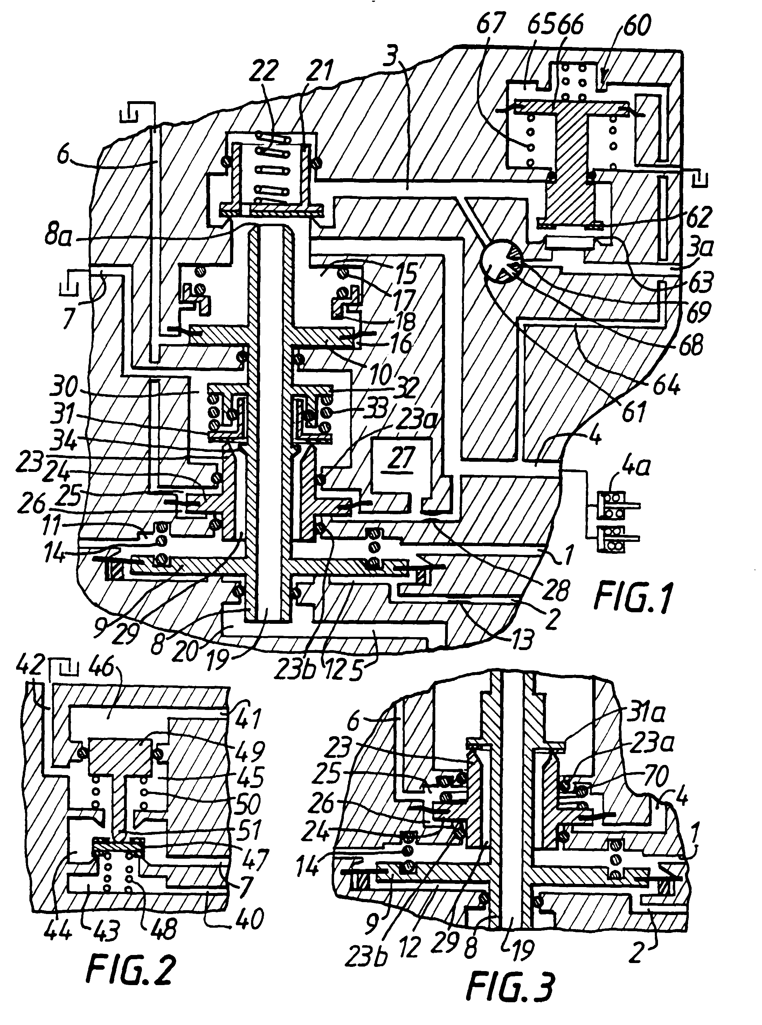

La figure 1 montre une vue schématique partielle du dispositif principal d'un distributeur de freinage selon l'invention; ne sont représentées sur la figure que les parties du distributeur nécessaires à une bonne compréhension de l'invention. N'est notamment pas représentée sur la figure 1 la valve de purge qui permet d'obtenir manuellement un desserrage des freins ou la vidange complète des capacités reliées au distributeur. Des conduites ou tronçons de conduite 1, 2, 3 et 4 représentées sur la figure 1 sont respectivement reliées à la conduite générale, au réservoir de commande, au réservoir auxiliaire, et à un organe de freinage, tel que par exemple un cylindre de frein. La conduite 4 peut aussi être reliée non pas directement au cylindre de frein, mais par exemple à un relais à commande pneumatique, qui commande des cylindres de frein, que l'on englobe sous la dénomination générale d'organe de freinage.

La conduite 5 est reliée à l'atmosphère par des ouvertures calibrées; le cas échéant, la conduite 5 est reliée à l'atmosphère via un robinet d'étranglement marchandise-voyageur permettant de faire varier la taille de ces ouvertures, pour adapter le distributeur à une utilisation pour le transport ferroviaire de marchandises ou de voyageurs.

La conduite 6 est reliée à l'atmosphère.

La conduite 7 est reliée à l'atmosphère; le cas échéant, la conduite 7 peut être reliée à l'atmosphère par l'intermédiaire d'un dispositif de verrouillage d'accélérateur tel que celui décrit plus bas en référence à la figure 2.

Le dispositif principal de la figure 1 permet, comme indiqué plus haut, de délivrer une pression de freinage (conduite 4) provenant du réservoir auxiliaire (conduite 3) en fonction de la pression de la conduite générale (conduite 1) et de la pression du réservoir de commande (conduite 2).

Le dispositif principal de la figure 1 comprend un équipage principal 8 monté mobile suivant une course verticale. Cet équipage principal 8 présente un piston de grand diamètre 9 et un piston de petit diamètre 10. Le piston de grand diamètre 9 sépare une chambre 11 supérieure d'une chambre 12 inférieure. La chambre 11 est reliée à la conduite 1 menant à la conduite générale et est appelée dans la suite chambre générale 11. La chambre 12 est reliée à la conduite 2 menant au réservoir de commande, via un étranglement 13. La chambre 12 est appelée dans la suite chambre de commande 12.

Un ressort 14 sollicite l'équipage principal 8 vers le bas. De la sorte, en référence à la figure 1, l'équipage principal 8 est sollicité vers le bas sous l'action conjointe de la force exercée par le ressort 14 et de la pression régnant dans la chambre générale 11 et agissant sur la face supérieure du piston de grand diamètre 9. L'équipage principal est sollicité vers le haut par l'action de la pression régnant dans la chambre de commande 12 sur la face inférieure du piston de grand diamètre 9.

Le piston de petit diamètre 10 sépare une chambre 15 supérieure d'une chambre 16 inférieure. Les deux chambres sont isolées des chambres générale 11 et de commande 12 par des moyens tels que des joints toriques. La chambre 15 est reliée à la conduite 4 menant à l'organe de freinage, et est appelée dans la suite chambre de freinage 15. La chambre 16 est reliée à la conduite 6 menant à l'atmosphère, et est appelée par la suite chambre atmosphérique 16.

De la sorte, l'équipage principal 8 est sollicité vers le bas par l'action de la pression régnant dans la chambre de freinage 15 sur la face supérieure du piston de petit diamètre 10. L'équipage principal est sollicité vers le haut par l'action de la pression atmosphérique régnant dans la chambre atmosphérique 16 sur la face inférieure du piston de petit diamètre 10.

En outre, le dispositif principal présente par exemple dans la chambre de freinage 15, un ressort 17 sollicitant vers le bas une bague 18 qui vient en appui sur une butée. Lorsque l'équipage principal 8 se déplace dans la partie supérieure de sa course, il vient en contact avec la bague 18 et est soumis à l'action du ressort 17 qui tend à le faire descendre. Lorsque l'équipage principal 8 se déplace, dans la partie inférieure de sa course, la bague 18 vient en appui sur la butée et le ressort 17 ne sollicite plus l'équipage principal 8.

L'équipage principal 8 est traversé sur toute sa hauteur par un passage central 19. Le passage central 19 débouche, à sa partie inférieure, dans une chambre 20 reliée à la conduite 5. La chambre 20 est appelée dans la suite chambre de purge 20. Le passage central 19 débouche, à sa partie supérieure, dans la chambre de freinage 15, au voisinage de l'ouverture de la conduite 4.

Le dispositif principal comprend un clapet d'alimentation 21 équilibré à double siège, sollicité vers le bas par un ressort 22 de rappel du clapet d'alimentation 21, susceptible d'être sollicité vers le haut par la partie supérieure de l'équipage principal 8, qui forme un poussoir creux 8a traversé par le passage central 19. Le clapet d'alimentation 21 présente un premier siège périphérique, permettant d'isoler la conduite 3 menant au réservoir auxiliaire de la chambre de freinage 15, au voisinage de l'ouverture de la conduite 4. Le clapet d'alimentation 21 présente un deuxième siège central permettant d'obturer le passage central 19 de l'équipage principal 8, lorsque celui-ci sollicite le clapet d'alimentation 21 vers le haut. Ainsi, le clapet d'alimentation 21 permet, lorsque l'équipage principal 8 est en position basse, de mettre la conduite 4 menant à l'organe de freinage en communication avec l'atmosphère, via la chambre de freinage 15, le passage central 19, la chambre de purge 20, la conduite 5 et le cas échéant les étranglements du robinet de commutation voyageurs/marchandises. Le clapet d'alimentation 21, lorsqu'il est soulevé par l'équipage principal 8, obture le passage central 19 et met la conduite 4 menant à l'organe de freinage en communication avec la conduite 3 menant au réservoir auxiliaire via la chambre de freinage 15.

Les éléments décrits jusqu'ici permettent, comme cela apparaîtra plus clairement par la suite, de mettre l'organe de freinage (conduite 4) en communication avec le réservoir auxiliaire (conduite 3) ou avec l'atmosphère (conduite 5), en fonction de la pression dans la conduite générale (conduite 1) et de la pression du réservoir de commande (conduite 2).

Le dispositif principal présente en outre, selon l'invention, un dispositif accélérateur. Celui-ci comprend un équipage détecteur 23, monté mobile suivant une course verticale, et présentant un piston 24. L'équipage détecteur est monté sur deux joints 23a et 23b qui le guident avec une certaine friction. Le piston 24 sépare une chambre 25 supérieure d'une chambre 26 inférieure. La chambre 25 est reliée à l'atmosphère via la conduite 6. la chambre 26 présente une capacité, réglable le cas échéant par une poche 27 et est reliée via un étranglement 28 à la conduite 4 menant à l'organe de freinage. Ainsi, l'équipage détecteur 23 est sollicité vers le bas par l'action de la pression atmosphérique sur la face supérieure du piston 24, et vers le haut par l'action de la pression régnant dans la chambre 26 sur la face inférieure du piston 24. Les joints 23a et 23b induisent une certaine résistance de friction au déplacement de l'équipage détecteur 23.

L'équipage détecteur 23 est disposé autour de l'équipage principal 8. Entre l'équipage détecteur 23 et l'équipage principal est ménagé un passage annulaire 29 qui, à sa partie inférieure, débouche dans la chambre générale 11 reliée à la conduite générale. A sa partie supérieure, le passage 29 débouche dans une chambre accélératrice 30 reliée à l'atmosphère via la conduite 7, et un dispositif de verrouillage d'accélérateur.

L'équipage principal 8 présente un clapet d'accélérateur 31. Le clapet d'accélérateur présente un siège sur lequel vient porter l'équipage détecteur 23, de façon à obturer le passage annulaire 29. Le clapet d'accélérateur peut être solidaire de l'équipage principal, comme le montre la figure 3, ou encore être monté dans un support 32, comme le montre la figure 1, et comme ceci est décrit plus bas.

Le fonctionnement du dispositif principal de la figure 4 est maintenant décrit, en fonction des différentes situations.

### Position de marche

En position de marche, le réservoir de commande, le réservoir auxiliaire et la conduite générale sont à la pression nominale. L'organe de freinage est à la pression atmosphérique.

Les pressions sont égales sur les deux faces du piston de grand diamètre 9 et sur les deux faces du piston de petit diamètre 10. L'équipage principal 8 est en position basse sous l'action du ressort 14. De la sorte, la partie supérieure du passage central 19 est décollée de son siège sur le clapet d'alimentation 21, tandis que ledit clapet d'alimentation isole la conduite 3 (réservoir auxiliaire). La conduite 4 (organe de freinage) est reliée à l'atmosphère via la chambre de freinage 15, le passage central 19, la chambre de purge 20 et la conduite 5.

### Premier serrage

Au premier serrage, la pression dans la conduite générale diminue brutalement. La pression dans la chambre générale 11 diminue, et l'équipage principal 8 se déplace vers le haut sous l'action des forces s'exerçant sur le piston de grand diamètre 9. De la sorte, l'équipage principal vient en appui sur le clapet d'alimentation 21, ce qui obture la partie supérieure du passage central 19.

L'équipage principal continue à monter et décolle le clapet d'alimentation 21 de son siège, ce qui permet un écoulement d'air sous pression depuis la conduite 3 (réservoir auxiliaire) vers la chambre de freinage 15 et la conduite 4 (organe de freinage).

Par ailleurs, lorsque l'équipage principal 8 se soulève, l'équipage détecteur 23 reste immobile: les pressions sur les deux faces du piston 24 sont égales et les joints 23a et 23b provoquent, par leur serrage en position, une résistance de friction, qui s'oppose au mouvement de l'équipage détecteur.

La montée de l'équipage principal décolle le clapet d'accélérateur 31 de son siège et ouvre le passage annulaire 29. la conduite générale est donc reliée à l'atmosphère, via la conduite 1, la chambre générale 11, le passage annulaire 29, la chambre accélératrice 30 et la conduite 7.

Lorsque la pression dans la chambre de freinage 15 et dans la conduite 4 augmente, la chambre 26 et la poche 27 sont remplies via l'étranglement 28. Le piston 24 de l'équipage détecteur reste soumis sur sa face supérieure à la pression atmosphérique dans la chambre 25, et l'équipage détecteur 23 remonte donc, dès que la force exercée par la pression régnant dans la chambre 26 dépasse la force de friction des joints 23a et 23b. L'équipage détecteur vient en butée sur le clapet d'accélérateur 31, ce qui obture le passage annulaire 29 et isole la conduite 1 (conduite générale) de l'atmosphère.

L'invention permet donc une mise à l'atmosphère de la conduite générale, au début du freinage, pour accélérer la vitesse de progression de la baisse de pression le long du train.

La durée de la mise à l'atmosphère de la conduite générale est réglée par le volume de la chambre 26 et de la poche 27, ainsi que par la taille de l'étranglement 28.

### Serrage gradué

Dans la suite du serrage, l'équipement détecteur 23 reste en position haute, en appui contre le clapet d'accélérateur: de fait, le piston 24 de l'équipage détecteur est soumis sous sa face inférieure à la pression de freinage, et sur sa face supérieure à la pression atmosphérique. La conduite 1 reste donc isolée après le début du serrage.

### Desserrage

Au desserrage, la pression dans la conduite générale remonte. La pression dans la chambre générale 11 remonte en conséquence; les pressions sont alors égales sur les deux faces du piston de grand diamètre 9. L'équipage principal 8 redescend sous l'action du ressort 14 et sous l'action de la pression régnant dans la chambre de freinage 15 et s'exerçant sur la face supérieure du piston de petit diamètre 10.

En redescendant, l'équipage principal 8 entraîne vers le bas le clapet d'accélérateur 31, ce qui maintient le passage annulaire 19 obturé. L'équipage détecteur est en même temps entraîné vers le bas.

Le clapet d'alimentation 21 redescend et isole la conduite 3. La descente de l'équipage principal ouvre le passage central 19, et met la conduite 4 à l'atmosphère, la chambre 26 et la poche 27 se vident alors par l'étranglement 28, et le dispositif principal revient dans la situation décrite plus haut (position de marche).

Après avoir décrit le fonctionnement du dispositif principal et du dispositif accélérateur, on décrit maintenant divers modes de réalisation et détails de l'invention.

Dans la description ci-dessus, on a supposé que le clapet d'accélérateur 31 était solidaire de l'équipage principal 8, comme ceci est le cas dans le mode de réalisation de la figure 3. Dans le mode de réalisation de la figure 1, le clapet d'accélérateur 31 n'est pas monté directement sur l'équipage détecteur: comme on peut le voir sur la figure, le clapet d'accélérateur 31 est monté mobile par rapport à l'équipage principal, suivant une course verticale. En fait, l'équipage principal présente au-dessus du clapet 31, un épaulement 32 portant un ressort 33 qui sollicite le clapet 31 vers le bas. Le clapet d'accélérateur 31 et l'épaulement 32 comprennent chacun une partie de guidage cylindrique. Le dispositif principal 8 présente en outre, sous le clapet d'accélérateur, une collerette 34. Un joint est disposé entre les parties de guidage cylindriques du clapet 31 et de l'épaulement 32, ou encore entre le clapet 31 et l'équipage principal 8, de façon à assurer l'étanchéité entre le passage annulaire 29 et la chambre accélératrice 30.

Le fonctionnement du dispositif accélérateur est semblable à celui décrit plus haut, à la différence suivante près: lorsque l'équipage principal monte, le clapet d'accélérateur 31 descend par rapport à l'équipage principal 8, sous l'action du ressort 33 et est maintenu en appui sur l'équipage détecteur.

Lorsque l'équipage principal 8 continue à monter, le clapet d'accélérateur vient en appui sur la collerette 34 et est entraîné vers le haut, en même temps que l'équipage principal. Le clapet d'accélérateur 31 se décolle de son siège sur l'équipage détecteur 23 et ouvre le passage annulaire 29.

Ce mode de réalisation permet d'éviter une mise à l'atmosphère intempestive de la conduite générale, en cas de déplacements de faible amplitude de l'équipage principal 8, par exemple du fait de chocs ou de secousses. On choisit par exemple une course du clapet d'accélérateur par rapport à l'équipage principal de l'ordre de 1 mm. Une telle valeur suffit à éviter des déclenchements intempestifs du dispositif accélérateur, sans nuire à l'efficacité de ce dernier.

En outre, ce mode de réalisation présente l'avantage que le clapet d'accélérateur 31 est appuyé sur son siège sur l'équipage détecteur sous l'action de la force exercée par le ressort 33. Au contraire, dans le mode de réalisation de la figure 3, c'est la force de rappel du ressort 14 qui appuie le clapet 31 sur son siège, puisque le clapet 31 est solidaire de l'équipage principal. La force de rappel du ressort 33 doit être suffisante pour vaincre les forces de friction des joints 23a et 23b (si ces forces existent), mais elle peut être plus faible que la force de rappel du ressort 14. De la sorte, on risque moins de marquer le joint en élastomère du clapet 31.

Le dispositif accélérateur s'ouvre lorsque le dispositif principal commence à délivrer une pression de freinage vers les moyens de liaison 4 à des organes de freinage, de sorte à relier à l'atmosphère les moyens de liaison 1 à une conduite générale. Comme expliqué ci-dessus, dans le mode de réalisation de la figure 1, en fonction des dimensions de l'équipage principal 8 et de l'équipage détecteur 23, et en fonction de la position relative de la collerette 34 et du clapet 31, il est possible que le dispositif accélérateur s'ouvre non pas exactement lorsque le dispositif principal commence à délivrer une pression de freinage, mais légèrement avant ou légèrement après. On entend par "lorsque" non pas un strict lien de simultanéité, mais un lien de causalité entre le début de la délivrance de pression vers les organes de freinage par le dispositif principal et l'ouverture du dispositif accélérateur.

La figure 2 montre une vue schématique d'un dispositif de verrouillage d'accélérateur, utilisé dans un mode de réalisation de l'invention. Le dispositif de verrouillage d'accélérateur de la figure 2 permet d'améliorer le fonctionnement du dispositif principal de la figure 2, lors du premier gonflage des capacités.

En effet, si toutes les capacités sont vides, par exemple à la suite d'un arrêt prolongé ou d'une purge, on fait remonter la pression de la conduite générale pour charger les réservoirs de commande et les réservoirs auxiliaires. Le réservoir de commande est chargé à travers un étranglement, mais le réservoir auxiliaire, pour des raisons de sécurité, est fermé par une soupape de retenue sollicitée par un ressort.

A l'ouverture de cette soupape de retenue, la pression dans la conduite 1 chute brutalement et peut devenir temporairement inférieure à la pression dans le réservoir de commande et dans la conduite 2. Dans un tel cas, il est possible que l'équipage principal 8 remonte, et que le dispositif accélérateur 23 mette la conduite 1 (conduite générale) en communication avec l'atmosphère. Ceci est évidemment intempestif lors du chargement des réservoirs auxiliaire et de commande, car ceux-ci ne peuvent plus se remplir.

Le dispositif de verrouillage d'accélérateur de la figure 2 a pour fonction de pallier à cet inconvénient. Il est transparent en fonctionnement normal, au serrage et au desserrage. Le dispositif de verrouillage d'accélérateur est relié à la chambre 26 par une conduite référencée 40. Il est relié à la conduite 7 menant à la chambre accélératrice 30. Le dispositif de verrouillage d'accélérateur présente aussi une conduite 41 reliée au réservoir auxiliaire, et une conduite 42 à l'atmosphère.

Le dispositif de verrouillage d'accélérateur présente, de bas en haut, quatre chambres respectivement reliées aux quatre conduites 40, 7, 41, 42: une chambre de détection 43 est reliée à la conduite 40; une chambre accélératrice 44 est reliée à la conduite 7; une chambre atmosphérique 45 est reliée à l'atmosphère via la conduite 42. Une chambre auxiliaire 46 est reliée au réservoir auxiliaire via la conduite 41.

Le dispositif de verrouillage d'accélérateur comprend un clapet 47, susceptible de se déplacer dans la chambre accélératrice 44 entre une position basse et une position haute. En position basse, le clapet 47 isole la chambre de détection 43 de la chambre accélératrice 44, qui est alors reliée à la chambre atmosphérique 45. En position haute, le clapet 47 isole la chambre accélératrice 44 de la chambre atmosphérique 45, la chambre accélératrice 44 étant alors reliée à la chambre de détection 43.

Le clapet 47 est sollicité vers le haut par un ressort 48.

Le dispositif de verrouillage d'accélérateur présente en outre un équipage mobile 49, isolant la chambre atmosphérique 45 de la chambre auxiliaire 46. L'équipage mobile 49 est sollicité vers le bas par l'action de la pression régnant dans la chambre auxiliaire 46 sur sa face supérieure. Il est sollicité vers le haut par l'action de la pression régnant dans la chambre atmosphérique 45 sur sa face inférieure, et par l'action d'un ressort 50. L'équipage mobile présente en outre un poussoir 51 susceptible de venir solliciter le clapet 47 vers le bas, lorsque l'équipage mobile descend.

Le fonctionnement du dispositif de verrouillage d'accélérateur de la figure 2 est le suivant:

### Remplissage des capacités

Au remplissage des capacités, la pression dans la conduite 3 (réservoir auxiliaire) et dans la chambre auxiliaire 46 est insuffisante pour vaincre la force de rappel du ressort 50. L'équipage mobile est donc en position haute, et le poussoir 51 n'agit pas sur le clapet 47. Sous l'action du ressort 48, le clapet 47 est en position haute et isole la chambre accélératrice 44 de la chambre atmosphérique 45.

Dans cette position du dispositif de verrouillage d'accélérateur, le problème mentionné plus haut ne se produit plus. Comme expliqué plus haut, à l'ouverture de la soupape de retenue du réservoir auxiliaire, l'équipage principal monte et le dispositif accélérateur peut se déclencher. Dans ce cas, la conduite générale est reliée à la chambre accélératrice 44 via la conduite 1, la chambre générale 11, le passage 29, la chambre accélératrice 30 et la conduite 7. Comme le clapet 47 est en position haute, la conduite générale n'est pas mise à l'atmosphère.

En outre, comme le clapet 47 est en position haute, l'air provenant de la chambre accélératrice 44 s'écoule via la chambre de détection 43 et la conduite 40 vers la chambre 26 située sous le piston 24 de l'équipage détecteur 23. De la sorte, l'équipage détecteur remonte.

Ainsi, au premier remplissage, le dispositif de verrouillage d'accélérateur permet d'éviter la mise à l'atmosphère de la conduite générale et d'assurer la fermeture du dispositif d'accélération et, le cas échéant, d'accélérer cette fermeture.

### Capacités chargées

Dès que le réservoir auxiliaire est chargé, le dispositif de verrouillage d'accélérateur devient transparent. De fait, l'équipage mobile 49 est repoussé par la pression du réservoir auxiliaire en position basse, et le poussoir 51 sollicite le clapet 47 vers le bas, de façon à obturer le passage entre la chambre accélératrice 44 et la chambre de détection 43.

Dans cette position (qui est celle représentée à la figure 2), la conduite 7 est reliée à l'atmosphère, et le volume de la chambre de détection 43 s'ajoute au volume de la poche 27. A ce dernier détail près, la description donnée en référence à la figure 1 n'est modifiée en rien: le dispositif de verrouillage d'accélérateur est bien transparent en fonctionnement normal.

La pression limite dans le réservoir auxiliaire pour laquelle le dispositif de verrouillage d'accélérateur devient transparent correspond à la force de rappel des deux ressorts 48 et 50 divisée par la surface de l'équipage mobile sur laquelle s'exerce la pression dans la chambre auxiliaire 46. Cette valeur doit en outre être corrigée pour tenir compte d'une part de la pression s'exerçant dans la chambre de détection 43 sur le clapet 47, qui tend à faire remonter le clapet 47 et d'autre part de la friction du joint d'étanchéité.

Le dispositif de verrouillage d'accélérateur permet ainsi, le cas échéant, d'obvier tout problème pouvant se poser lors du premier remplissage avec le dispositif principal de la figure 1.

On décrit maintenant, en référence à la figure 1, encore d'autres modes de réalisation et détails de l'invention. La figure 1 montre une partie des dispositifs habituellement présents dans un distributeur de freinage. Sont interposés entre le réservoir auxiliaire et le clapet d'alimentation 21 du dispositif principal un dispositif de premier temps 60 et un robinet 61 d'étranglement marchandise-voyageur (appelé également robinet G/P). Le dispositif de premier temps 60 a pour fonction d'assurer que la pression de freinage est initialement délivrée à grand débit (pour assurer l'armement des organes de freinage), puis ensuite à un débit plus faible. Le robinet 61 d'étranglement marchandise-voyageur a pour fonction de permettre de régler les temps de serrage, c'est-à-dire la durée minimale de la montée de la pression de freinage, par modification de la taille de certains étranglements. Plus précisément, le robinet G/P permet de modifier la section transversale minimale de passage depuis le réservoir auxiliaire vers le clapet d'alimentation 21, et/ou la section transversale minimale de la conduite 5 (comme expliqué plus haut).

Le dispositif de premier temps comporte un ensemble de clapet 62 et de siège 63 à grande section de passage dont la position de fermeture est contrôlée par la pression statique dans la conduite 4 (vers les organes de freinage), amenée par un conduit de liaison 64 à une chambre de coupure 65. Un piston 66 d'actionnement du clapet 62 est sollicité vers le haut par un ressort taré 67 logé dans une chambre mise à l'atmosphère et vers le bas par la pression de freinage amenée à la chambre 65 par le conduit de liaison 64.

Le fonctionnement du dispositif de premier temps 60 est le suivant.

### Début du serrage: premier temps.

Au début du serrage, le piston 66 est en position haute sous l'action du ressort 67, et le clapet 62 est décollé de son siège 63. De la sorte, le flux d'air depuis le réservoir auxiliaire vers le clapet d'alimentation 21 s'effectue à grand débit à travers la section de passage du siège 63.

### Suite et fin du serrage.

Dès que la pression statique dans la conduite 4 dépasse le tarage du ressort 67, le piston 66 passe en position basse sous l'action de la pression régnant dans la chambre 65. Le clapet 62 s'applique sur le siège 63 pour obturer le passage à grande section. Le flux d'air depuis le réservoir auxiliaire vers le clapet d'alimentation 21 s'effectue alors via le robinet 61 et la section de passage est limitée soit par l'étranglement voyageur 68, soit par l'étranglement marchandise 69 normalement de section beaucoup plus réduite, selon la position du robinet 61.

La valeur de la pression de fermeture du dispositif de premier temps 60 est choisie pour permettre d'assurer à grand débit l'armement des organes de freinage, c'est-à-dire le remplissage des capacités de freinage et le début du déplacement des pistons des organes de freinage. Une valeur possible de la pression de fermeture du dispositif de premier temps 60 est par exemple de 0,5 à 0,7 bars.

L'invention propose que le dispositif d'accélérateur se ferme et isole la conduite 1 de l'atmosphère avant que le dispositif de premier temps ne se ferme.

Ceci permet notamment de contrôler la durée d'ouverture et l'instant de la fermeture du dispositif accélérateur, indépendamment de la position du robinet G/P. Compte tenu du débit pendant le premier temps, et de la différence entre la pression du réservoir auxiliaire et la pression dans les organes de freinage pendant le premier temps (typiquement: 5 bars et moins de 0,7 bars), ceci permet aussi d'assurer que l'instant de la fermeture du dispositif accélérateur est sensiblement indépendant de la capacité des organes de freinage.

L'invention propose en outre, comme on peut le voir représenté schématiquement sur la figure 1, que la chambre 26 soit reliée à la conduite 4 de façon à prélever dans la conduite 4 la pression statique régnant dans cette conduite. Ceci présente l'avantage de permettre de fermer le dispositif accélérateur indépendamment du flux d'air vers les organes de freinage, et sensiblement indépendamment de la capacité des organes de freinage.

La figure 3 montre une vue schématique partielle du dispositif accélérateur selon un autre mode de réalisation de l'invention. Les éléments identiques à ceux de la figure 1 sont affectés des mêmes chiffres de référence.

Dans le mode de réalisation de la figure 3, comme expliqué plus haut, le clapet d'accélérateur 31a est solidaire du dispositif principal 8.

Dans le mode de réalisation de la figure 3, la chambre 26 est directement reliée à la conduite 4, sans la poche 27 et l'étranglement 28 de la figure 1. L'équipage détecteur 23 est sollicité vers le bas par un ressort 70. Il n'est pas nécessaire, dans le mode de réalisation de la figure 3, que les joints 23a, 23b induisent une friction, et on peut aussi utiliser d'autres moyens pour guider l'équipage détecteur.

L'équipage principal 8, lorsqu'il est en position basse, est en appui, par l'intermédiaire du clapet 31a, sur l'équipage détecteur 23, lui-même en appui sur une butée du corps de distributeur.

La course de l'équipage détecteur 23 est suffisante, par rapport à celle de l'équipage principal 8, pour que lorsque l'équipage détecteur 23 et l'équipage principal 8 sont en position haute, le passage annulaire 29 puisse être obturé par le clapet d'accélérateur 31a.

Le fonctionnement du dispositif accélérateur de la figure 3 est sensiblement identique à celui de la figure 1.

### Ouverture du dispositif accélérateur.

Le dispositif accélérateur est déclenché dès le départ vers le haut de l'équipage principal 8, car l'équipage détecteur 23 est retenu par le ressort 70.

### Fermeture du dispositif accélérateur.

La pression dans la conduite 4 est amenée directement à la chambre 26; dès que la pression statique dans la conduite 4 (on remarquera sur la figure 1 que la pression dynamique dans la conduite 4 à grand débit est pratiquement soustraite de la pression statique) dépasse le tarage du ressort 70, l'équipage détecteur 23 se déplace vers le haut pour appliquer son siège sur le clapet 31a et obturer le passage annulaire 29. Cependant, à la différence du dispositif accélérateur représenté à la figure 1, dans lequel le dispositif accélérateur commute brutalement de la position ouverte à la position fermée, le déplacement de l'équipage détecteur à l'encontre du ressort de rappel taré 70 est progressif en fonction de la pression de freinage statique régnant dans la chambre 26.

Dans ce mode de réalisation, le clapet d'accélération 31a se referme d'autant plus facilement que l'équipage principal 8 a commencé à descendre, sous l'action de la pression de freinage délivrée à la chambre 15, qui s'oppose à la baisse de pression de la conduite générale dans la chambre générale 11. En d'autres termes, l'accélération de l'onde de serrage est d'autant plus importante avec le dispositif représenté à la figure 3 que la baisse de pression de la conduite générale 1 est importante.

Les modes de réalisation du dispositif accélérateur décrits en référence aux figures 1 et 3 peuvent être combinés. On peut donc choisir un clapet accélérateur 31, 31a solidaire ou non de l'équipage principal; on peut prévoir des joints 23a, 23b à friction ou sans friction; on peut prévoir ou ne pas prévoir un ressort 70, une poche 27 et un étranglement 28.

Pour régler la fermeture du dispositif accélérateur, il faut prendre en compte la force nécessaire pour réaliser cette fermeture, en fonction de la friction éventuelle des joints 23a, 23b, de la présence ou non d'un ressort 70, et le cas échéant du poids de l'équipage détecteur 23. Cette force de fermeture est fonction de la surface du piston 24 et de la pression de fermeture dans la chambre 26. La pression dans la chambre 26 est fonction de la pression dans la conduite 4, du volume éventuel de la poche 27, et de la section éventuelle de l'étranglement 28. On règle ces différents paramètres en fonction des résultats souhaités.

L'homme du métier choisira, en fonction de l'expérience et des conditions d'exploitation, les différentes valeurs des sections des pistons et des forces de rappel des ressorts, pour mettre en oeuvre l'invention.

A titre d'exemple, on peut choisir les valeurs suivantes:
- pression du réservoir auxiliaire nécessaire pour ouvrir le dispositif de verrouillage d'accélérateur: 3 bars;
- ouverture du dispositif accélérateur: dépression de conduite générale de 0,1 bar;
- fermeture du dispositif de premier temps: pression dans la conduite 4 (organes de freinage) de 0,5 bar;
- fermeture du dispositif accélérateur: pression dans la conduite 4 (organes de freinage) de 0,4 bar;

Ces valeurs permettent d'obtenir des durées de mise à l'atmosphère de la conduite générale de l'ordre de 0,1 à 1 s, suffisantes pour atteindre une vitesse de propagation de l'onde de serrage de 250 ms⁻¹.

Ces valeurs peuvent par exemple être atteintes par la combinaison de réglages suivante (joints 23a et 23b à friction, étranglement 28 et poche 27, pas de ressort 70):
- taille de l'étranglement 28: 0,5 mm²;
- volume de la poche 27: 0,1 1;
- force de friction des joints 23a et 23b: 20 N;
- surface du piston 24 de l'équipage détecteur: 20 cm²;
ou encore par la combinaison de réglages suivante (joints 23a et 23b à friction, pas d'étranglement 28 ni de poche 27, ressort 70):
- force de friction des joints 23a et 23b: 10 N;
- force de réaction du ressort 70, en position basse de l'équipage détecteur 23: 30 N;
- surface du piston 24 de l'équipage détecteur: 12 cm²;

On rappelle à ce sujet les principales valeurs de pression imposées par l'UIC (Union Internationale des Chemins de Fer), qui sont bien connues de l'homme du métier, et qui permettent de faire passer un véhicule ferroviaire d'un réseau à l'autre sans risquer de problèmes de freinage, que ce soit en plaine ou en montagne:
- pression de régime de la conduite générale: entre 4 et 6 bars;
- dépression produisant la pression de freinage maximale de 3,8 bars: 1,5 bar;
- pression de premier temps: entre 0,5 et 0,7 bars;
- temps de serrage: 4 secondes en régime voyageur et 20 secondes en régime marchandises.
- vitesse de propagation de l'onde de serrage au premier serrage (fonctionnement des accélérateurs de freinage): au moins 250 ms⁻¹.

## Revendications

1. Distributeur de freinage à fluide sous pression pour un véhicule ferroviaire, comprenant:
- des moyens de liaison (1) à une conduite générale;
- des moyens de liaison (2) à un réservoir de commande;
- des moyens de liaison (3) à un réservoir auxiliaire;
- des moyens de liaison (4) à des organes de freinage;
- un dispositif principal, délivrant une pression de freinage vers les moyens de liaison (4) à des organes de freinage, en fonction de la pression dans les moyens de liaison (1) à une conduite générale et de la pression dans les moyens de liaison (2) à un réservoir de commande ;
- un dispositif accélérateur (23, 24, 29, 31), susceptible de relier à l'atmosphère les moyens de liaison (1) à une conduite générale ; et dans lequel
ledit dispositif accélérateur s'ouvre lorsque le dispositif principal commence à délivrer une pression de freinage vers les moyens de liaison (4) à des organes de freinage, de sorte à relier à l'atmosphère les moyens de liaison (1) à une conduite générale; et en ce que
ledit dispositif accélérateur se ferme lorsque la pression dans une chambre de détection (26), reliée aux moyens de liaison (4) à des organes de freinage dépasse une valeur prédéterminée, de sorte à isoler de l'atmosphère les moyens de liaison (1) à une conduite générale,
caractérisé en ce que ledit dispositif accélérateur (29, 31) est susceptible de relier à l'atmosphère les moyens de liaison (1) à une conduite générale par l'intermédiaire d'une chambre accélératrice (30) et d'un dispositif de verrouillage d'accélérateur, en ce que ledit dispositif de verrouillage d'accélérateur isole de l'atmosphère ladite chambre accélératrice (30) lorsque la pression dans les moyens de liaison (3) à un réservoir auxiliaire est inférieure à une troisième valeur prédéterminée, et en ce que ledit dispositif de verrouillage d'accélérateur relie ladite chambre accélératrice (30) à l'atmosphère lorsque la pression dans les moyens de liaison (3) à un réservoir auxiliaire est supérieure à ladite troisième valeur prédéterminée.

2. Distributeur de freinage selon la revendication 1 et qui comprend un dispositif de premier temps (60) réduisant la section des moyens de liaison (3) à un réservoir auxiliaire lorsque la pression dans les moyens de liaison (4) à des organes de freinage dépasse une seconde valeur prédéterminée, ladite valeur de pression prédéterminée de fermeture dudit dispositif accélérateur étant inférieure à ladite seconde valeur prédéterminée, caractérisé en ce que le dispositif de verrouillage d'accélérateur relie ladite chambre accélératrice (30) à la chambre de détection (26) lorsque la pression dans les moyens de liaison (3) à un réservoir auxiliaire est inférieure à ladite troisième valeur prédéterminée, pour accélérer la fermeture du dispositif d'accélération.

3. Distributeur de freinage selon l'une quelconque des revendications 1 et 2, dans lequel ledit dispositif principal comprend un équipage principal (8) mobile sous l'action de la pression dans les moyens de liaison (1) à une conduite générale et de la pression dans les moyens de liaison (2) à un réservoir de commande ;
- ledit dispositif accélérateur comprend :
- un équipage détecteur (23) mobile et présentant un piston (24) soumis sur une face à la pression régnant dans ladite chambre de détection (26);
- un passage (29) reliant à l'atmosphère lesdits moyens de liaison (1) à une conduite générale;
- un clapet d'accélérateur (31, 3 la) monté sur ledit dispositif principal (8) et susceptible d'obturer ledit passage (29); et dans lequel
- ledit clapet d'accélérateur (31, 3 la) ouvre ledit passage (29) lorsque l'équipage principal (8) se déplace pour délivrer une pression de freinage vers les moyens de liaison (4) à des organes de freinage; et
- ledit clapet d'accélérateur (31, 31 a) ferme ledit passage (29) lorsque la pression dans ladite chambre de détection (26) dépasse une valeur prédéterminée et lorsque ledit piston (24) d'équipage détecteur (23) se déplace, caractérisé en ce que ledit équipage détecteur (23) est sollicité par un ressort (70) dans une direction opposée à celle de l'action de la pression régnant dans ladite chambre de détection (26).

4. Distributeur de freinage selon la revendication 3, caractérisé en ce que ledit équipage détecteur (23) est disposé autour dudit équipage principal (8).

5. Distributeur de freinage selon la revendication 3, caractérisé en ce que ledit passage (29) est un passage annulaire ménagé entre ledit équipage détecteur (23) et ledit équipage principal (8).

6. Distributeur de freinage selon la revendication 3, caractérisé en ce que ledit équipage détecteur (23) est monté mobile par l'intermédiaire d'au moins un joint (23a, 23b) à friction.

7. Distributeur de freinage selon l'une des revendications 3 et 6, caractérisé en ce que ledit clapet d'accélérateur (31) est monté sur ledit dispositif principal (8) par l'intermédiaire de moyens de coulissement et d'entraînement (32, 33, 34), de sorte à être mobile par rapport audit dispositif principal sur une faible course.

## Patentansprüche

1. Druckluftbremsverteiler oder Dreidruckregler für ein Schienenfahrzeug, der aufweist:
- eine Einrichtung (1) zum Verbinden mit einer Hauptzuleitung (Bremsleitung);
- eine Einrichtung (2) zum Verbinden mit einem Steuerreservoir;
- eine Einrichtung (3) zum Verbinden mit einem Hilfsreservoir;
- eine Einrichtung (4) zum Verbinden mit Bremsorganen;
- eine Hauptvorrichtung, die, in Abhängigkeit vom Druck in der Einrichtung (1) zum Verbinden mit einer Hauptzuleitung und vom Druck in der Einrichtung (2) zum Verbinden mit einem Steuerreservoir, einen Bremsdruck an die Einrichtung (4) zum Verbinden mit dem Bremsorgan liefert;
- eine Beschleunigungsvorrichtung (23, 24, 29, 31), die dazu in der Lage ist, die Vorrichtung (1) zum Verbinden mit einer Hauptzuleitung mit der Umgebung zu verbinden; und bei welcher sich die Beschleunigungsvorrichtung öffnet, wenn die Hauptvorrichtung beginnt, einen Bremsdruck an die Einrichtung (4) zum Verbinden mit Bremsorganen zu liefern, so dass die Einrichtung (1) zum Verbinden mit einer Hauptzuleitung mit der Umgebung verbunden wird; und wobei
die Beschleunigungsvorrichtung sich schliesst, wenn der Druck in einer mit der Einrichtung (4) zum Verbinden mit den Bremsorganen verbundenen Detektorkammer (26) einen vorbestimmten Wert übersteigt, so dass die Einrichtung (1) zum Verbinden mit einer Hauptzuleitung von der Umgebung isoliert wird,
dadurch gekennzeichnet, dass die Beschleunigungsvorrichtung (29, 31) dazu in der Lage ist, die Einrichtung (1) zum Verbinden mit einer Hauptzuleitung mit der Umgebung zu verbinden, und zwar mittels einer Beschleunigerkammer (30) und einer Vorrichtung zum Blockieren des Beschleunigers, wozu die Vorrichtung zum Blockieren des Beschleunigers die Beschleunigerkammer (30) von der Umgebung isoliert, wenn der Druck in der Einrichtung (3) zum Verbinden mit einem Hilfsreservoir niedriger ist als ein dritter vorbestimmter Wert, und wozu die Vorrichtung zum Blockieren des Beschleunigers die Beschleunigerkammer (30) mit der Umgebung verbindet, wenn der Druck in der Einrichtung (3) zum Verbinden mit einem Hilfsreservoir höher ist als der dritte vorbestimmte Wert.

2. Bremsverteiler gemäss Anspruch 1, der eine erste Stufe-Vorrichtung (60) aufweist, die den Querschnitt der Einrichtung (3) zum Verbinden mit einem Hilfsreservoir verringert, wenn der Druck in der Einrichtung (4) zum Verbinden mit Bremsorganen niedriger wird als ein zweiter vorbestimmter Wert, wobei der Druck zum Schliessen der Beschleunigunsvorrichtung niedriger ist als der zweite vorbestimmte Wert, dadurch gekennzeichnet, dass die Vorrichtung zum Blockieren des Beschleunigers die Beschleunigerkammer (30) mit der Detektorkammer (26) verbindet, wenn der Druck in der Einrichtung (3) zum Verbinden mit einem Hilfsreservoir niedriger ist als der dritte vorbestimmte Wert, so dass das Schliessen der Beschleunigungsvorrichtung beschleunigt wird.

3. Bremsverteiler gemäss einem der Ansprüche 1 - 2, wobei die Hauptvorrichtung ein unter Einwirkung des Druckes in der Einrichtung (1) zum Verbinden mit einer Hauptzuleitung und des Druckes in der Einrichtung (2) zum Verbinden mit einem Steuerreservoir bewegbares Hauptorgan (8) aufweist;
die Beschleunigungsvorrichtung aufweist:
ein bewegliches Detektororgan (23), das einen Kolben (24) aufweist, dessen eine Fläche dem in der Detektorkammer (26) herrschenden Druck unterworfen ist;
einen Durchlassgang (29), der die Einrichtung (1) zum Verbinden mit einer Hauptzuleitung mit der Umgebung verbindet;
eine auf dem Hauptorgan (8) befestigte Beschleunigerklappe (31, 31 a), die dazu in der Lage ist, den Durchlassgang (29) zu verschliessen; und wobei
die Beschleunigerklappe (31, 31a) den Durchlassgang (29) öffnet, wenn sich das Hauptorgan (8) zum Liefern eines Bremsdruckes an die Einrichtung (4) zum Verbinden mit Bremsorganen verschiebt; und
die Beschleunigungsklappe (31, 31a) den Durchlassgang (29) verschliesst, wenn der Druck in der Detektorkammer (26) einen vorbestimmten Wert überschreitet und wenn der Kolben (24) des Detektororgans (23) von einer Feder (70) in eine der Wirkungsrichtung des in der Detektorkammer (26) herrschenden Druckes entgegengesetzte Richtung belastet wird.

4. Bremsverteiler gemäss Anspruch 3, dadurch gekennzeichnet, dass das Detektororgan (23) rund um das Hauptorgan (8) angeordnet ist.

5. Bremsverteiler gemäss Anspruch 3, dadurch gekennzeichnet, dass der Durchlassgang (29) ein ringförmiger, zwischen dem Detektororgan (23) und dem Hauptorgan (8) vorgesehener Durchlassgang ist.

6. Bremsverteiler gemäss Anspruch 3, dadurch gekennzeichnet, dass das Detektororgan (23) mittels einer Reibungsdichtung (23a, 23b) bewegbar ist.

7. Bremsverteiler gemäss einem der Ansprüche 3 und 6, dadurch gekennzeichnet, dass die Beschleunigerklappe (31) dergestalt mittels Einrichtungen (32, 33, 34) zum Gleiten und Antreiben auf dem Hauptorgan (8) befestigt ist, dass sie bezüglich der Hauptvorrichtung kurzhubig bewegbar ist.

## Claims

1. A pressurised fluid braking distributor or brake control valve for a rail vehicle, comprising:
- means providing a connection (1) to a brake line;
- means providing a connection (2) to a control reservoir;
- means providing a connection (3) to an auxiliary reservoir;
- means providing a connection (4) to braking members;
- a main device, supplying a braking pressure to said means providing a connection (4) to said braking members, as a function of the pressure in the said means providing a connection (1) to said brake line and the pressure in said means providing a connection (2) to said control reservoir;
- an accelerator device (23, 24, 29, 31), adapted to connect to the atmosphere said means providing a connection (1) to said brake line; and in which said accelerator device opens when the said main device starts to supply a braking pressure to said means providing a connection (4) to braking members, in order to connect said means providing a connection (1) to a brake line to the atmosphere; and in that
said accelerator device closes when the pressure in a detection chamber (26), connected to said means providing a connection (4) to said braking members exceeds a predetermined value, in order to isolate from the atmosphere said means providing a connection (1) to a brake line,
characterised in that said accelerator device (29, 31) is adapted to connect to the atmosphere said means providing a connection (1) to a brake line, via an accelerator chamber (30) and an accelerator locking device, in that said accelerator locking device isolates said accelerator chamber (30) from the atmosphere when the pressure in said means providing a connection (3) to said auxiliary reservoir is lower than a third predetermined value, and in that said accelerator locking device connects said accelerator chamber (30) to the atmosphere when the pressure in the said means providing a connection (3) to an auxiliary reservoir is greater than said third predetermined value.

2. The braking distributor according to claim 1, and which comprises a first step device (60) initially reducing the cross section of the said means providing a connection (3) to said auxiliary reservoir when the pressure in said means providing a connection (4) to said braking members exceeds a second predetermined value, said predetermined pressure value at which said accelerator device closes being lower than said second predetermined value, characterised in that the accelerator locking device links said accelerator chamber (30) to the said detection chamber (26) when the pressure in said means providing a connection (3) to an auxiliary reservoir is lower than said third predetermined value, in order to accelerate closing of the said accelerator device.

3. The braking distributor according to any one of claims 1 and 2, in which said main device comprises a main mounting (8) able to move under the pressure in said means providing a connection (1) to said brake line and the pressure in said means providing a connection (2) to a control reservoir;
- said accelerator device comprising:
- a detection mounting (23) which is movable and has a piston (24) submitted on one side to the pressure prevailing in said detection chamber (26);
- a passage (29) connecting said means providing a connection (1) to said brake line to the atmosphere;
- an accelerator valve plate (31, 3 la) mounted on said main mounting (8) and designed to close off said passage (29); and in which,
- said accelerator valve plate (31, 31a) opens said passage (29) when the main mounting (8) moves in order to deliver a braking pressure to said means providing a connection (4) to said braking members; and
- said accelerator valve plate (31, 3 la) closes said passage (29) when the pressure in said detection chamber (26) exceeds a predetermined value and when said piston (24) of the said detection mounting (23) moves, characterised in that said detection mounting (23) is urged by a spring (70) in a direction opposite to that in which the pressure prevailing in said detection chamber (26) acts.

4. The braking distributor according to claim 3, characterised in that said detecting mounting (23) is arranged around the said main mounting (8).

5. The braking distributor according to claim 3, characterised in that said passage (29) is an annular passage provided between said detecting mounting (23) and said main mounting (8).

6. The braking distributor according to claim 3, characterised in that said detection mounting (23) is movably mounted via at least one friction joint (23 a, 23 b).

7. The braking distributor according to one of claims 3 or 6, characterised in that said accelerator valve plate (31) is mounted on the said main mounting (8) via sliding and driving means (32, 33, 34), in order to be moveable with respect to said main device over a short length of travel.
